# EUROPEAN PATENT SPECIFICATION

(11) **EP 3 264 529 B1**
(45) Date of publication and mention of the grant of the patent: **17.04.2019**
(21) Application number: 16177483.1
(22) Date of filing: 01.07.2016
(51) Int. Cl.: H01Q 15/14, H01Q 15/16, H01Q 19/12, H01Q 19/02, H01Q 19/13

(54) **REFLECTOR FOR A FIXED POSITION RADAR ANTENNA**
RADARANTENNENREFLEKTOR MIT FESTER POSITION
RÉFLECTEUR D'UNE ANTENNE RADAR À POSITION FIXE

(43) Date of publication of application: 03.01.2018
(73) Proprietor: Progress Rail Inspection & Information Systems S.r.l., 40134 Bologna (IT)
(72) Inventor: Agostini, Alessandro, 50134 Firenze (IT); Mazzinghi, Agnese, 50125 Firenze (IT); Albani, Matteo, Firenze (IT)
(74) Representative: BRP Renaud & Partner mbB Rechtsanwälte Patentanwälte Steuerberater

(56) References cited:
- US-A- 4 750 002
- SORENSEN S B: "MANUAL FOR POS", MANUAL FOR POS. PHYSICAL OPTICS SINGLE REFLECTOR SHAPING PROGRAM, TICRA ENGINEERING CONSULTANTS, COPENHAGEN, DK, 1 February 1991 (1991-02-01), pages 1-01,2, XP002118529,
- ZHANG ZHENGGUANG ET AL: "Design of shaped reflector antenna of low orbit satellites for data transmission", ANTENNAS, PROPAGATION AND EM THEORY, 2003. PROCEEDINGS. 2003 6TH INTER NATIONAL SYMPOSIUM ON OCT. 28-NOV 1, 2003, PISCATAWAY, NJ, USA,IEEE, 28 October 2003 (2003-10-28), pages 132-136, XP032140129, DOI: 10.1109/ISAPE.2003.1276646 ISBN: 978-0-7803-7831-5
- BORRIES OSCAR ET AL: "Full-wave optimization of large Compact Antenna Test Ranges", 2016 10TH EUROPEAN CONFERENCE ON ANTENNAS AND PROPAGATION (EUCAP), EUROPEAN ASSOCIATION OF ANTENNAS AND PROPAGATION, 10 April 2016 (2016-04-10), pages 1-5, XP032906697, DOI: 10.1109/EUCAP.2016.7481694 [retrieved on 2016-05-31]

## Description

### Technical Field

This disclosure relates to the field of radar systems, in particular fixed radar systems for inspection of a sectorial circle shape area and, more particularly, to radar antennas of fixed radar systems.

### Background

Radar systems are generally used to detect objects within an area under surveillance. The radar systems emit a beam with a radiation pattern. Generally directive antennas have a main lobe in the required direction of propagation of then radar beam. Side lobes may be present in unwanted directions of propagation of the beam. A main beam width, a limited ripple in the main beam-width, a wide frequency band and a maximum side lobe level are indices for describing the characteristics of antenna patterns of general. Generally beam width is an input requirement while low side lobes and limited gain ripple in the main lobe are merit factors of an antenna destined to a radar application for surveillance or obstacle detection.

XP2118529 is part of a user's manual for a single reflector shaping program based on physical optics analysis to calculate several contoured beam coverages of a satellite antenna.

The present disclosure is directed, at least in part, to improving or overcoming one or more aspects of the prior art system.

### Brief Summary of the Invention

The invention, as defined in claim 1, relates to a method to manufacture a reflector for a radar antenna having a predetermined far field radiation pattern for a preset frequency range. The method comprises the steps of calculating a shape of a reflective surface based on geometrical optics with reference to the predetermined far field radiation pattern for the preset frequency range; determining initial radiation current on the reflective surface for the calculated shape based on physical optics (PO); calculating the radiation pattern of the calculated shape of the reflective surface from the initial radiation current; comparing the radiation pattern with the predetermined far field radiation pattern to obtain a constrained radiation pattern; calculating a constrained radiation current on the reflective surface corresponding to the constrained radiation pattern; determining a phase difference between the initial radiation current and the constrained radiation current for each point of the reflective surface; varying the level of each point of the reflective surface to compensate the phase difference so as to obtain a matrix defining an adjusted shape of the reflective surface; and applying the matrix to machine the reflective surface.

In a second aspect, the present disclosure describes a reflector for a radar antenna having a predetermined far field radiation pattern for a preset frequency range manufactured according in accordance to the method herein disclosed.

The reflectors antennas automatically match the requirement of a wide frequency band.

### Brief Description of the Drawings

The foregoing and other features and advantages of the present disclosure will be more fully understood from the following description of various embodiments, when read together with the accompanying drawings, in which:
Fig. 1 is an isometric view of a radar antenna according to the present disclosure;
Fig. 2 is an illustration of a radar pulsed signal reflected of a reflector of the radar antenna of Fig. 1 to a predetermined far field radiation pattern;
Fig. 3 is an illustration of comparing a radiation pattern with the predetermined far field radiation pattern of Fig. 2;
Fig. 4 is an illustration of restricting the radiation patter to form a constrained radiation pattern; and
Fig. 5 is an illustration of a matrix of a variance in the level of the reflective surface at various points.

### Detailed Description

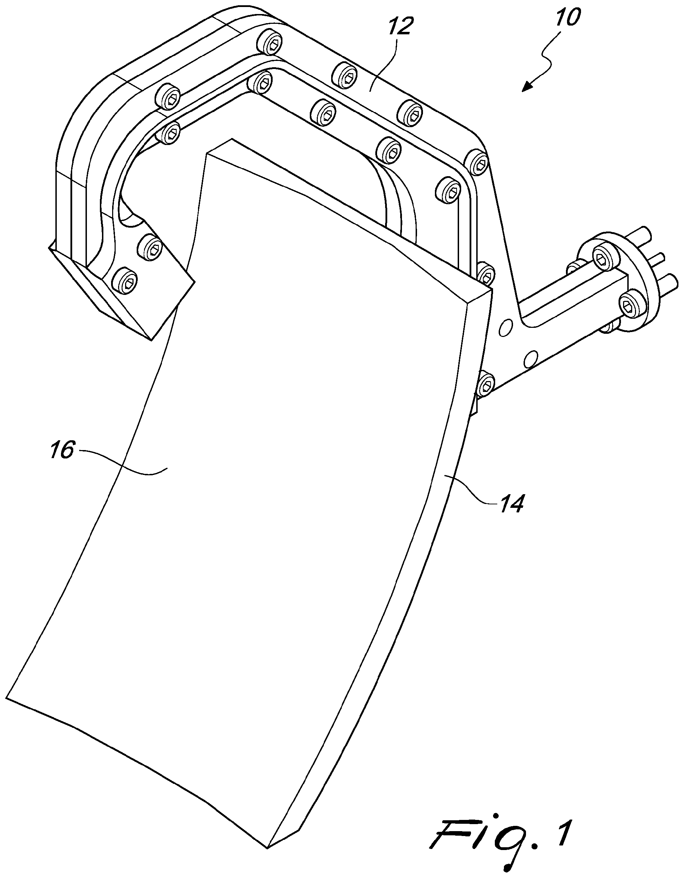

This disclosure generally relates to a radar antenna **10.** With reference to Fig. 1, the radar antenna **10** may comprise a feeder **12** for delivering a radar signal to a reflector **14.** The radar signal may be a radar pulse signal or a Frequency Modulated Continuous Wave (FMCW). The reflector **14** may have a reflective surface **16** that is illuminated by the feeder **12.** The radar signal may be reflected towards a zone of surveillance by the reflective surface **16.**

The feeder **12** may be offset from the center point of the reflective surface **16.** The reflective surface **16** may determine the required radiation pattern of the radar antenna **10.** The reflector **14** may be machined so as to have a variance across the reflective surface **16.** The reflector **14** may be machined so as to have a variance in the level reflective surface **16.** The variance in the level of the reflective surface **16** may be defined as the change in the depth/ height of the reflective surface **16.** The variance in the level of the reflective surface **16** may determine the shape of the radiation pattern.

The reflector **14** may be a parabolic reflector. The reflector **14** may collimate radiation in a single plane. Reflector **14** may allow for beam-steering or beam-shaping of an inspection beam with predetermined elevation or azimuth beam angles.

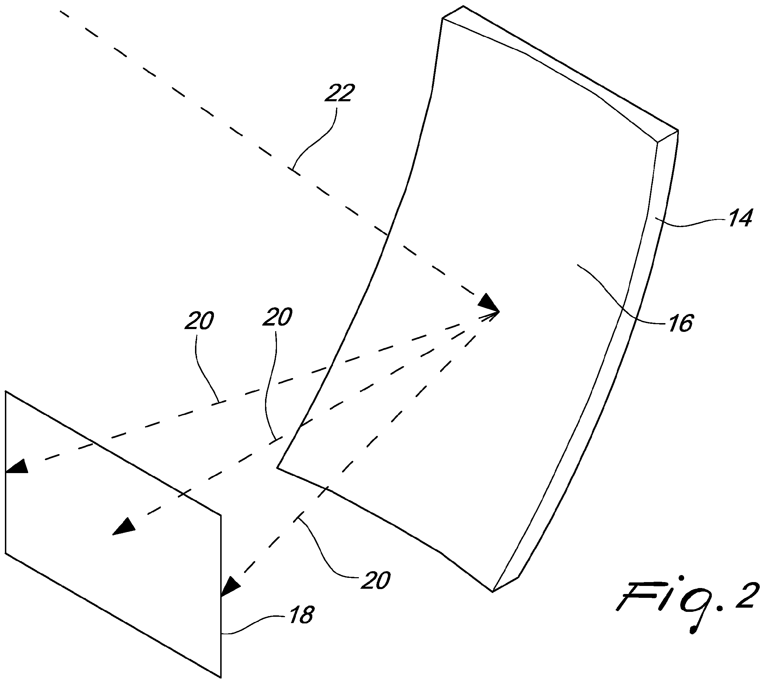

A method to manufacture the reflector **14** for the radar antenna **10** is described. With reference to Fig. 2, the radar antenna **10** may have a predetermined far field radiation pattern **18** for a preset frequency range. The predetermined far field radiation pattern **18** may be an ideal radiation pattern for a fixed antenna position and a radar inspection of a circular sector. The predetermined far field radiation pattern **18** may have a wide frequency band.

The far field radiation pattern **18** may depend on the amplitude and phase of the reflected radar signal **20** reflected from the reflective surface **16.** The amplitude of the reflected radar signal **20** may be unchanged relative to the radar signal **22** delivered from the feeder **12.** The phase of the reflected radar signal **20** may be modified by the reflective surface **16.** In particular, the variance in the level of the reflective surface **16** may determine the phase of the reflected radar signal **20.**

The method may comprise the step a) of calculating a shape of the reflective surface **16** based geometrical optics. The calculation of the shape is performed with reference to the predetermined far field radiation pattern **18** for the preset frequency range. The preset frequency range is in the 10-100GHz range. At this preset frequency range the most benefit is achieved at the millimetre waves. The calculation of the shape may be achieved, as examples, by Matlab or Comsol applied initially on a parabolic reflector.

The method comprises the step b) of determining initial radiation current on the reflective surface **16** for the calculated shape. The initial radiation current for the calculated shape may be calculated using physical optics (PO). The initial radiation current may be calculated on the reflective surface **16.** The far field radiation integral may be calculated on a hemispherical solid angle. The calculation of the initial radiation pattern may be achieved, as examples, by Matlab, Comsol of HFSS.

The method comprises the step c) of calculating the radiation pattern of the calculated shape of the reflective surface **16** from the initial radiation current. The radiation pattern may be calculated by reversing the Helmholtz equation, that re-calculates the source currents based on the far field radiation. This calculation is known as "holographic inversion".

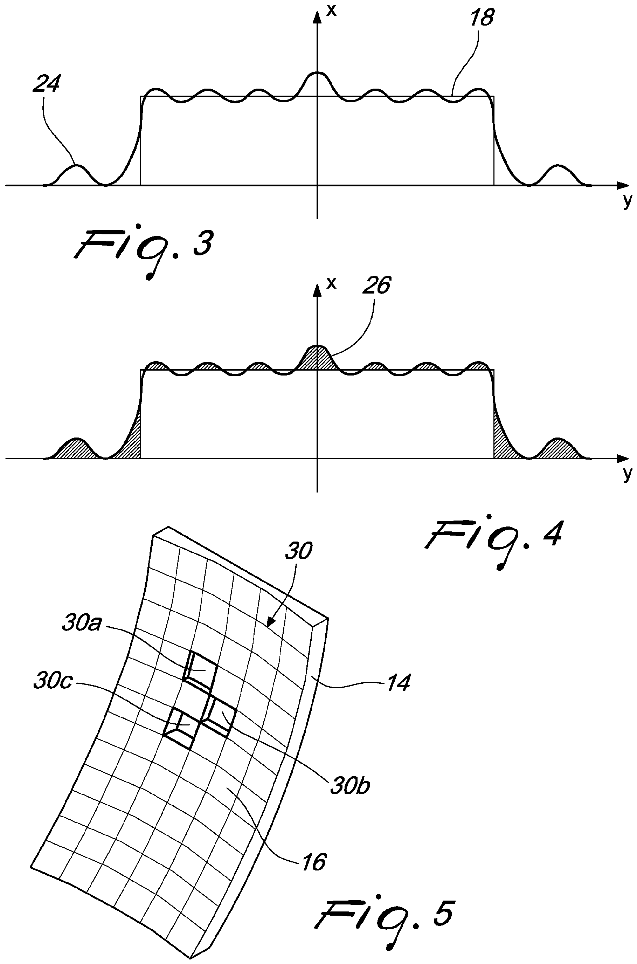

With reference to Fig. 3, the method comprises the step d) of comparing the radiation pattern **24** with the predetermined far field radiation pattern **18** to obtain a constrained radiation pattern **26** as seen in Fig. 4. The shaded portions reflect the restrictions that are placed on the radiation pattern **24** to obtain the constrained radiation pattern **26.** In Figs. 3 and 4, the predetermined far field radiation pattern **18** and the radiation pattern **24** are shown in relation to the Gain/ Directivity in the X-axis and the azimuth angle.

The constrained radiation pattern **26** may be defined by restricting the amplitude of the radiation pattern **24** to the amplitude of the predetermined far field radiation pattern **18.** The radiation pattern located within the predetermined far field radiation pattern is unchanged.

The amplitude of the main lobe and side lobes of the radiation pattern **24** may be restricted to the respective amplitudes of the predetermined far field radiation pattern **18.** The constrained radiation pattern **26** may have amplitudes that are lower than the amplitudes of the radiation pattern **24.** The admitted side lobe level of the radiation pattern **24** is restricted to the limit of the predetermined far field radiation pattern **18.** The constrained radiation pattern **26** may have side lobes with reduced than the side lobe amplitudes of the radiation pattern **24.**

The method comprises the step e) of calculating a constrained radiation current on the reflector surface **18** corresponding to the constrained radiation pattern **26.** The constrained radiation current may be calculated based on PO with reference to the constrained radiation pattern **26.** The constrained radiation current may be calculated by holographic inversion of the far field radiation integral. The calculation of the constrained radiation current may be achieved, as examples, by Matlab.

The method comprises the step f) of determining a phase difference between the initial radiation current and the constrained radiation current for each point of the reflective surface **16.** Each point the reflective surface **16** may be defined by a x,y coordinate thereon. Each point may be defined by a pitch of lambda/20 where lambda is the wavelength associated to the centre frequency. The centre frequency may be that of the radar signal from the feeder or of the reflected radar signal.

The method comprises the step g) of varying the level of each point of the reflective surface **16** to compensate the phase difference in order to obtain a matrix **30** defining an adjusted shape of the reflective surface **16** as seen in Fig. 5. The phase difference may be converted as a variation to the shape of the reflective surface **16.** The phase difference may be converted as a variation for each point on the reflective surface **16.** The phase difference may be compensated varying the distance between the reflective surface **16** and the feeder **12** at each point thereon.

As an example matrix **30** illustrates lowered points **30a, 30b** and **30c.** The lowered points lowered points **30a, 30b** and **30c** may have different magnitudes of depth. Each points indicate the adjusted level of the reflective surface **16.** Together these points show the adjusted shape of the reflective surface **16.**

The method comprises the step h) of applying the matrix **30** to machine the reflective surface **16.** The reflector **14** may be made from aluminium permitting machining of the reflective surface **16** to be performed with ease. The matrix serves as a template for the machining process.

In an embodiment, steps b) to f) are repeated to obtain the matrix **30** prior to step g). The method may comprise a plurality of iterations involving steps b) to f). With each iteration the phase difference between the initial radiation current and the constrained radiation current is reduced and the modified shape shifts closer to the predetermined far field radiation pattern. Each iteration of steps b) to f) may lead to a matrix **30** at step g) that reflects a modified shape of the reflective surface **16.** The number of iterations may be dependent on the level of phase difference to be achieved.

A reflector **14** for a radar antenna **10** having a predetermined far field radiation pattern for a preset frequency range that is manufactured according to the foregoing method.

The skilled person would appreciate that foregoing embodiments may be modified or combined to obtain the radar antenna **10** of the present disclosure.

### Industrial Applicability

This disclosure describes a radar antenna **10.** The radar antenna **10** is capable of inspection of a surveillance area with specific azimuth and elevation beam angles. The azimuth beam angle may be between 12° to 30°. Preferably, the fixed azimuth beam angle is 12°, 22° or 30°. The elevation beam angle may be 2° to 5° to avoid ground reflections. Preferably the elevation beam angle is 2.5°. The inspection angle of the radar antenna **10** may be the combined azimuth and elevation beam angles.

Radar antenna **10** may propagate a beam in the millimeter-wave region. In particular, the beam may have a frequency of 75GHz. All these mentioned methods are hardly producible at these frequencies and most of them do not have enough bandwidth like needed here (>1GHz). Radar antenna **10** may be configured to have a very low detection from outside of the desired inspection angle. In an embodiment, the inspection angle may comprise a 30° azimuth angle and a 2.5° elevation angle. This characteristic, named as roll-off, has to be a rejection of more than 20dB (from main gain) in less than 3° out of the (inspection angle).

## Claims

1. A method to manufacture a reflector (14) for a radar antenna (10) having a predetermined far field radiation pattern (18) for a preset frequency range, the method comprising the steps of:
a. calculating a shape of a reflective surface (16) based on geometrical optics with reference to the predetermined far field radiation pattern for the preset frequency range;
b. determining initial radiation current on the reflective surface (16) for the calculated shape based on physical optics;
c. calculating the radiation pattern (24) of the calculated shape of the reflective surface (16) from the initial radiation current;
d. comparing the radiation pattern (24) with the predetermined far field radiation pattern (18) to obtain a constrained radiation pattern (26);
e. calculating a constrained radiation current on the reflective surface (16) corresponding to the constrained radiation pattern (26);
f. determining a phase difference between the initial radiation current and the constrained radiation current for each point of the reflective surface (16);
g. varying the level of each point of the reflective surface (16) to compensate the phase difference so as to obtain a matrix (30) defining an adjusted shape of the reflective surface (16); and
h. applying the matrix (30) to machine the reflective surface (16).

2. The method of claim 1 wherein the constrained radiation pattern (26) is defined by restricting the amplitude of the radiation pattern (24) to the amplitude of the predetermined far field radiation pattern (18).

3. The method of claim 2 wherein the amplitude of the main lobe and side lobes of the radiation pattern (24) are restricted to the respective amplitudes of the predetermined far field radiation pattern (18).

4. The method of any one of preceding claims wherein a far field radiation integral is calculated on a hemispherical solid angle.

5. The method of claim 4 wherein the constrained radiation current may be calculated by holographic inversion of the far field radiation integral.

6. The method of any one of preceding claims wherein steps b) to f) are repeated to obtain the matrix (30) prior to step g).

7. The method of any one of preceding claims wherein in step c the calculation is performed by reversing the Helmholtz equation.

8. A reflector for a radar antenna (10) having a predetermined far field radiation pattern (18) for a preset frequency range manufactured according to the method of any one of the preceding claims.

## Patentansprüche

1. Verfahren zur Herstellung eines Reflektors (14) für eine Radarantenne (10) mit einem vorbestimmten Fernfeldstrahlungsdiagramm (18) für einen voreingestellten Frequenzbereich, wobei das Verfahren die folgenden Schritte umfasst:
a. Berechnen einer Form einer reflektierenden Oberfläche (16) basierend auf geometrischer Optik in Bezug auf das vorbestimmte Fernfeldstrahlungsdiagramm für den voreingestellten Frequenzbereich;
b. Bestimmen des Anfangsstrahlungsstroms auf der reflektierenden Oberfläche (16) für die berechnete Form basierend auf physikalischer Optik;
c. Berechnen des Strahlungsdiagramms (24) der berechneten Form der reflektierenden Oberfläche (16) aus dem Anfangsstrahlungsstrom;
d. Vergleichen des Strahlungsdiagramms (24) mit dem vorbestimmten Fernfeldstrahlungsdiagramm (18), um ein beschränktes Strahlungsdiagramm (26) zu erhalten;
e. Berechnen eines beschränkten Strahlungsstroms auf der reflektierenden Oberfläche (16), der dem beschränkten Strahlungsdiagramm (26) entspricht;
f. Bestimmen einer Phasenverschiebung zwischen dem Anfangsstrahlungsstrom und dem beschränkten Strahlungsstrom für jeden Punkt der reflektierenden Oberfläche (16);
g. Variieren des Grades jedes Punktes der reflektierenden Oberfläche (16), um die Phasenverschiebung auszugleichen, sodass eine Matrix (30) erhalten wird, die die Form der reflektierenden Oberfläche (16) definiert und anpasst; und
h. Anwenden der Matrix (30) zum Bearbeiten der reflektierenden Oberfläche (16).

2. Verfahren nach Anspruch 1, wobei das beschränkte Strahlungsdiagramm (26) durch das Begrenzen der Amplitude des Strahlungsdiagramms (24) auf die Amplitude des vorbestimmten Fernfeldstrahlungsdiagramms (18) definiert ist.

3. Verfahren nach Anspruch 2, wobei die Amplitude der Hauptkeule und der Nebenkeulen des Strahlungsdiagramms (24) auf die jeweiligen Amplituden des vorbestimmten Fernfeldstrahlungsdiagramms (18) begrenzt sind.

4. Verfahren nach einem der vorstehenden Ansprüche, wobei ein Fernfeldstrahlungsintegral auf einen halbkugelförmigen Raumwinkel berechnet wird.

5. Verfahren nach Anspruch 4, wobei der beschränkte Strahlungsstrom durch holographische Umkehrung des Fernfeldstrahlungsintegrals berechnet werden kann.

6. Verfahren nach einem der vorstehenden Ansprüche, wobei die Schritte b) bis f) wiederholt werden, um die Matrix (30) vor Schritt g) zu erhalten.

7. Verfahren nach einem der vorstehenden Ansprüche, wobei in Schritt c die Berechnung durch Umkehrung der Helmholtz-Gleichung durchgeführt wird.

8. Reflektor für eine Radarantenne (10) mit einem vorbestimmten Fernfeldstrahlungsdiagramm (18) für einen voreingestellten Frequenzbereich, der nach dem Verfahren nach einem der vorstehenden Ansprüche hergestellt ist.

## Revendications

1. Procédé de fabrication d'un réflecteur (14) pour une antenne radar (10) présentant un diagramme de rayonnement en champ lointain prédéterminé (18) pour une plage de fréquence prédéfinie, le procédé comprenant les étapes suivantes :
a. le calcul d'une forme d'une surface réfléchissante (16) sur la base de l'optique géométrique en référence au diagramme de rayonnement en champ lointain prédéterminé pour la plage de fréquence prédéfinie ;
b. la détermination du courant de rayonnement initial sur la surface réfléchissante (16) pour la forme calculée sur la base de l'optique physique ;
c. le calcul du diagramme de rayonnement (24) de la forme calculée de la surface réfléchissante (16) à partir du courant de rayonnement initial ;
d. la comparaison du diagramme de rayonnement (24) avec le diagramme de rayonnement en champ lointain prédéterminé (18) pour obtenir un diagramme de rayonnement contraint (26) ;
e. le calcul d'un courant de rayonnement contraint sur la surface réfléchissante (16) correspondant au diagramme de rayonnement contraint (26) ;
f. la détermination d'une différence de phase entre le courant de rayonnement initial et le courant de rayonnement contraint pour chaque point de la surface réfléchissante (16) ;
g. la variation du niveau de chaque point de la surface réfléchissante (16) pour compenser la différence de phase de sorte à obtenir une matrice (30) définissant une forme ajustée de la surface réfléchissante (16) ; et
h. l'application de la matrice (30) pour usiner la surface réfléchissante (16).

2. Procédé selon la revendication 1, dans lequel le diagramme de rayonnement contraint (26) est défini par restriction de l'amplitude du diagramme de rayonnement (24) à l'amplitude du diagramme de rayonnement en champ lointain prédéterminé (18).

3. Procédé selon la revendication 2, dans lequel l'amplitude du lobe principal et des lobes latéraux du diagramme de rayonnement (24) est restreinte aux amplitudes respectives du diagramme de rayonnement en champ lointain prédéterminé (18).

4. Procédé selon l'une quelconque des revendications précédentes, dans lequel une intégrale de rayonnement en champ lointain est calculée sur un angle solide hémisphérique.

5. Procédé selon la revendication 4, dans lequel le courant de rayonnement contraint peut être calculé par inversion holographique de l'intégrale de rayonnement en champ lointain.

6. Procédé selon l'une quelconque des revendications précédentes, dans lequel les étapes b) à f) sont répétées pour obtenir la matrice (30) avant l'étape g).

7. Procédé selon l'une quelconque des revendications précédentes, dans lequel dans l'étape c le calcul est réalisé par inversion de l'équation de Helmholtz.

8. Réflecteur pour une antenne radar (10) présentant un diagramme de rayonnement en champ lointain prédéterminé (18) pour une plage de fréquence prédéfinie fabriqué selon le procédé selon l'une quelconque des revendications précédentes.
